Europäisches Patentamt

European Patent Office

Office européen des brevets

(19)

(11) Veröffentlichungsnummer: **0 017 054**
**B1**

(12)     # EUROPÄISCHE PATENTSCHRIFT

(45) Veröffentlichungstag der Patentschrift: **24.08.83**

(21) Anmeldenummer: **80101346.7**

(22) Anmeldetag: **14.03.80**

(51) Int. Cl.³: **G 01 N 27/04**

(54) **Vorrichtung zum Messen des spezifischen elektrischen Widerstandes in Mischgütern.**

(30) Priorität: **29.03.79 DE 2912530**

(43) Veröffentlichungstag der Anmeldung:
**15.10.80 Patentblatt 80/21**

(45) Bekanntmachung des Hinweises auf die Patenterteilung:
**24.08.83 Patentblatt 83/34**

(84) Benannte Vertragsstaaten:
**FR GB IT SE**

(56) Entgegenhaltungen:
**FR - A - 2 330 445**
**US - A - 3 141 129**
**US - A - 3 355 665**

(73) Patentinhaber: **ELBA-WERK Maschinen-**
**Gesellschaft mbH & Co.**
**Bahnhofstrasse 17-19**
**D-7505 Ettlingen (DE)**

(72) Erfinder: **Rapp, Joachim**
**Bahnhofstrasse 32**
**D-7504 Weingarten (DE)**
Erfinder: **Bittmann, Peter**
**Schlossgasse 6**
**D-7560 Gaggenau 19 (DE)**

Courier Press, Leamington Spa, England.

Vorrichtung zum Messen des spezifischen elektrischen Widerstandes in Mischgütern

Die Erfindung betrifft eine Vorrichtung zum Messen des spezifischen elektrischen Widerstandes von gegenüber einer durch einen Isolierkörper isolierten ersten Elektrode strömenden Mischgut in Mischern zur Aufbereitung von Beton, bei der die nicht vom Isolierkörper umgebenen Bereiche der Elektrodenoberfläche in einem flachen Winkel gegen die Mischgutströmung angestellt sind und wobei der Mischtrog selbst die zweite Elektrode bildet.

Bei der Betonbereitung ist der Wasseranteil von wesentlicher Bedeutung. Aus dem Wasser-Zement-Faktor ergibt sich einerseits die Voraussetzung für die Endfestigkeit des Betons, zum anderen die Konsistenz und es ist erforderlich, die jeweils vorgeschriebene Konsistenz des Betons genau einzuhalten, damit dieser wirtschaftlich verarbeitet werden kann. Erschwert wird die Dosierung des richtigen Wasseranteils durch den ständig variierenden Feuchtigkeitsgehalt der in die Mischung eingebrachten Zuschlagstoffe.

Um den Erfordernissen nach genauer Wasserdosierung gerecht zu werden, sind schon Geräte bekannt geworden, bei denen die Wasserzugabe aufgrund des spezifischen elektrischen Widerstandes des Mischgutes erfolgt. Dabei wird die Tatsache genützt, daß der spezifische elektrische Widerstand des Mischgutes mit zunehmendem Wasseranteil abnimmt. Der Widerstand wird bei bekannten Vorrichtungen mit einer oder mehreren Elektroden gegenseitig oder gegen die Wandung des Mischwerkes gemessen. Die Elektroden sind bei diesen Vorrichtungen als stab- oder flacheisenförmige Sonden ausgebildet, die teils unisoliert und bei einigen Vorrichtungen auch teilweise isoliert in das Mischgut hineinragen, während der Elektrodenkern aus der Isolierung herausragt.

Auf Grund der Ausbildung dieser Vorrichtungen ergibt sich eine unzureichende Genauigkeit der Messung die daher rührt, daß sich beim Mischvorgang das Mischgut an den Elektroden anlagert und sie mit der Zeit ganz oder teilweise zusetzt. Diese Anlagerungen verändern in undefinierbarer Weise die effektive Elektrodenfläche und somit das Meßergebnis.

Es ist auch eine Elektrodenanordnung bekannt (DE—A—17 84 920), bei der die Meßelektrode aus einer kegelförmigen Metallspitze an einem S-förmigen, isolierten Halter gebildet wird. Auch bei dieser Elektrode können sich bei zum Ankleben und Schmieren neigenden, bestimmten Betonarten Anlagerungen ausbilden, die die effektive Elektrodenfläche und somit das Meßergebnis beeinflussen. Außerdem wird das Meßergebnis bei relativ grobkörnigen und lockeren Betonen durch Dichteänderungen des Mischgutes an der Sondenoberfläche nachteilig beeinflußt.

Außerdem ist bei der vorbekannten Ausbildung der Meßsonde als kegelförmige Metallspitze gerade diese Spitze vorrangig einem Verschleiß ausgesetzt. Da die Größe der Meßsondenoberfläche das Meßergebnis direkt beeinflußt, ist bei geringstem Verschleiß eine entsprechende Korrektur des Meßwertes erforderlich, damit Verfälschungen ausgeglichen werden.

Der Erfindung liegt daher die Aufgabe zugrunde, diese Nachteile der bekannten Elektroden zu beseitigen und eine Elektrode zum Messen des spezifischen elektrischen Widerstandes eines zur Sonde in Relativbewegung befindlichen Mischgutes derart auszubilden, daß neben einer möglichst vollständigen Vermeidung einer Mischgutanlagerung, die die effektive Elektrodenfläche verändert, Dichteänderungen des Mischgutes an der Elektrodenoberfläche sowie ein die Größe der Elektrodenoberfläche beeinflussender Elektrodenverschleiß verhindert werden und somit die Elektrodenanordnung derart ausgebildet wird, daß stets ein den tatsächlichen Verhältnissen im Mischgut entsprechendes Meßergebnis erzielt wird.

Diese Aufgabe wurde für eine Vorrichtung der eingangs beschriebenen Gattung erfindungsgemäß dadurch gelöst, daß die nicht vom Isolierkörper umgebene Elektrodenoberfläche eine einzige ebene Deckfläche darstellt, die sich in der Unterseite des die Elektrode bündig umgebenden Isolierkörpers fortsetzt.

Bei einer Ausführungsart ist die Elektrode als Metallzylinder mit ebener Deckfläche ausgebildet und in einen hohlzylindrischen Isolierkörper eingesetzt, die Elektrode und der Isolierkörper sind in den Schaft eines flachen, an der Unterseite flanschartig verbreiterten Strömungsleitkörpers eingefügt und die Unterseite des Strömungsleitkörpers, die Unterseite des Isolierkörpers sowie die Deckfläche der Elektrode bilden eine ebene, bündig durchgehende Gleitfläche, in der die Elektrode das Mischgut flächig berührt.

Nach einer ebenfalls zur Erfindung gehörenden Abwandlung können die Elektrode und der Isolierkörper auch in einen Schaft eingefügt sein, der an einer in den Mischer fest eingebauten oder rotierenden Umlenkschaufel oder am Mischwerkzeug angeordnet ist. Diese Schaufeln oder die Mischwerkzeuge dienen dann als Strömungsleitkörper, von denen ständig eine gleichmäßige Mischgutverdichtung erzeugt wird.

Die besonderen Vorteile der erfindungsgemäßen Vorrichtung liegen vor allem darin, daß stets, auch bei stärksten Verschleiß verursachenden Mischgütern, eine konstante effektive Elektrodenfläche erhalten bleibt, die unverfälschte Meßergebnisse liefert. Dieser Effekt wird noch dadurch unterstützt, daß die Elektrodenfläche und die sie umgebende Isolier-fläche vom vorbeifließenden Mischgut ständig gereinigt werden und daß auch die gleichmäßige Verdichtung des Mischgutes an der Gleitfläche die Gleichmäßigkeit der Meßergebnisse günstig beeinflußt.

Nachfolgend wird ein Ausführungsbeispiel der Erfindung anhand der Zeichnung erläutert. In der Abbildung zeigen:

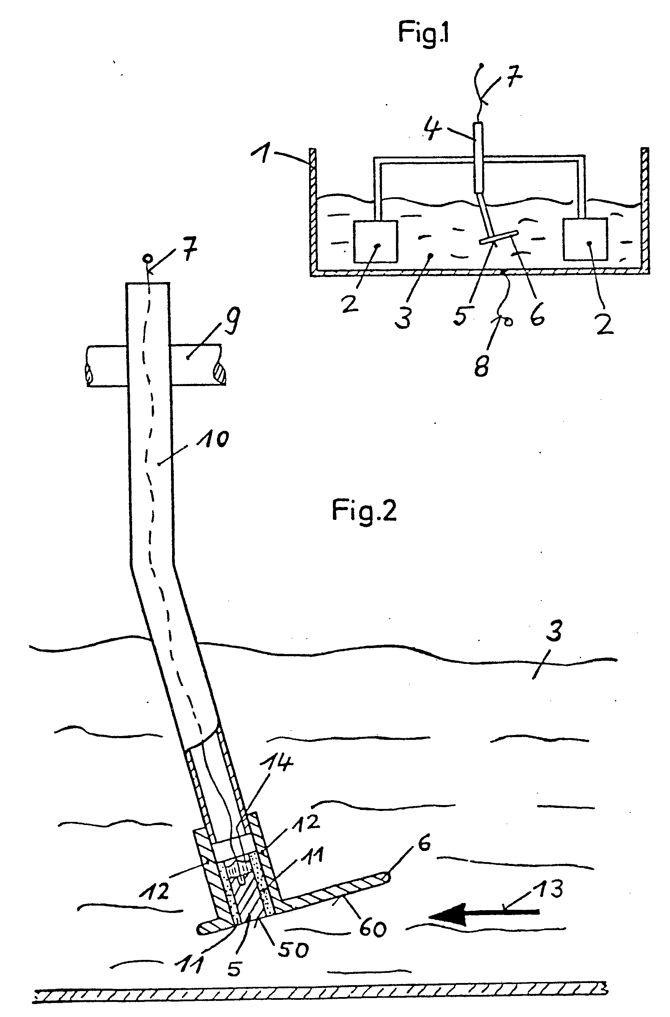

Fig. 1 einen Mischer im Schnitt, mit eingesetzter Elektrode;

Fig. 2 die Elektrode als Einzelheit, vergrößert und zum Teil geschnitten.

Im Mischer 1 befinden sich die Mischwerkzeuge 2, das Mischgut 3, die Elektroden-Vorrichtung 4 mit der Elektrode 5 und dem Strömungsleitkörper 6.

Durch die Leiter 7 und 8 werden die Meßströme einem bekannten Gerät zur Auswertung des spezifischen elektrischen Widerstandes des Mischgutes 3 zugeführt.

An einer Befestigung 9 ist ein Elektroden-Halterohr 10 angebracht, welches in das Mischgut 3 eintaucht. Das Halterohr 10 ist abgewinkelt, es kann jedoch auch gerade ausgeführt und in seiner Befestigung 9 verstellbar und schräg einstellbar sein. Am unteren Ende des Halterohres 10 befindet sich ein als Hohlzylinder ausgebildeter Isolierkörper 11, in den die vollzylindrische Elektrode 5 mit ihrer ebenen Deckfläche 50 eingesetzt ist. Der Isolierkörper 11 ist von einem Schaft 12 umgeben, welcher den flach ausgebildeten Strömungsleitkörper 6 trägt. Die Unterseiten des Strömungsleitkörpers 6, des Isolierkörpers 11 und die Deckfläche 50 der Elektrode 5 bilden die ebene, bündig durchgehende, untere Gleitfläche 60, die in einem flachen Winkel gegen die Mischgutströmung 13 angestellt ist.

Die Anschlußstelle, an welcher der aus dem Halterohr 10 herausführende Leiter 7 mit der Elektrode 5 verbunden wird, ist mit Isoliermasse 14 vergossen, damit sich kein elektrischer Nebenschluß bilden kann.

Wie vorher schon beschrieben, ist es selbstverständlich auch möglich, die erfindungsgemäße Elektroden-Vorrichtung an in den Mischer fest eingebauten oder rotierenden Umlenkschaufeln oder an Mischwerkzeugen anzuordnen, die dann als Strömungsleitkörper dienen.

Hauptsache ist dabei, daß der Strömungsleitkörper nach Verschleiß leicht und billig ausgewechselt werden kann und daß seine gegen die Mischgutströmung angestellte Gleitfläche für ständige Selbstreinigung der Elektroden-Deckfläche und für einen stets gleichmäßigen Verdichtungsgrad des Mischgutes sorgt.

Damit sind dauernd unverfälschte Meßergebnisse gewährleistet.

## Patentansprüche

1. Vorrichtung zum Messen des spezifischen elektrischen Widerstandes von gegenüber einer durch einen Isolierkörper isolierten ersten Elektrode strömenden Mischgut in Mischern zur Aufbereitung von Beton, bei der die nicht vom Isolierkörper umgebenen Bereiche der Elektrodenoberfläche in einem flachen Winkel gegen die Mischgutströmung angestellt sind und wobei der Mischtrog selbst die zweite Elektrode bildet, dadurch gekennzeichnet, daß die nicht vom Isolierkörper (11) umgebene Elektrodenoberfläche eine einzige ebene Deckfläche (50) darstellt, die sich in der Unterseite des die Elektrode (5) bündig umgebenden Isolierkörpers (11) fortsetzt.

2. Vorrichtung nach Anspruch 1, dadurch gekennzeichnet, daß die Elektrode (5) als Metallzylinder mit ebener Deckfläche (50) ausgebildet und in einem hohlzylindrischen Isolierkörper (11) eingesetzt ist, daß die Elektrode (5) und der Isolierkörper (11) in den Schaft (12) eines flachen, an der Unterseite flanschartig verbreiterten Strömungsleitkörpers (6) eingefügt sind und daß die Unterseite des Strömungsleitkörpers (6), die Unterseite des Isolierkörpers (11) und die Deckfläche (50) der Elektrode (5) eine ebene, bündig durchgehende Gleitfläche (60) bilden, in der die Elektrode (5) das Mischgut (3) flächig berührt.

3. Vorrichtung nach Anspruch 2, dadurch gekennzeichnet, daß die Elektrode (5) und der Isolierkörper (11) in einen Schaft (12) eingefügt sind, der an einer in den Mischer (1) fest eingebauten oder rotierenden Umlenkschaufel oder am Mischwerkzeug (2) angeordnet ist, die als der Strömungsleitkörper (6) dienen.

## Revendications

1. Appareil pour mesurer la résistivité d'un mélange de matériaux circulant contre une première électrode isolée par un corps isolant dans des mélangeurs destinés à la préparation de béton, dans lequel les régions de la surface de l'électrode qui ne sont pas isolées par le corps isolant sont disposées selon un angle plat par rapport au courant du mélange de matériaux, et dans lequel l'auge mélangeuse ellemême constitue l'autre électrode, caractérisé en ce que la surface de l'électrode qui n'est pas entourée par le corps isolant (11) présente une unique surface de recouvrement (50) plane qui se prolonge par le côté inférieur du corps isolant (11) qui entoure étroitement l'électrode (5).

2. Appareil selon la revendication 1, caractérisé en ce que l'électrode (5) est constituée sous forme d'un cylindre métallique comportant une surface de recouvrement (50) plane et qui est introduit dans un corps isolant (11) cylindrique et creux, en ce que l'électrode (5) et le corps isolant (11) sont introduits dans la tige creuse (12) d'un élément de guidage de courant (60) plat et s'élargissant sur son côté inférieur sous forme d'une plaque, et en ce que le côté inférieur de l'élément de guidage de courant, le côté inférieur du corps isolant (11) ainsi qui la surface de recouvrement (50) de l'électrode (5) forment une surface de glissement (60) plane, continue et jointive par laquelle l'électrode (5) est en contact de surface avec le mélange de matériaux (3).

3. Appareil selon la revendication 2, caractérisé en ce que l'électrode (5) et le corps isolant (11) sont insérés dans une tige creuse (12) qui est montée sur une aube de déviation rotative ou montée de façon fixe dans le mélangeur (1), ou sur l'outil mélangeur (2), qui servent d'élément de guidage de courant (6).

## Claims

1. Apparatus for measuring the resistivity of a mix flowing towards a first electrode insulated by an insulating member in mixers for preparing concrete, in which the regions of the electrode surface which are not surrounded by the insulating member are set at a shallow angle against the flow of the mix and the actual mixing trough forms the second electrode, characterised in that the electrode surface which is not surrounded by the insulating member (11) represents a single plane cover surface (50), which continues in the underside of the insulating member (11) surrounding the electrode (5) in a flush manner.

2. Apparatus according to claim 1, characterised in that the electrode (5) is formed as a metal cylinder with a plane cover surface (50) and is mounted in a hollow cylindrical insulating member (11), that the electrode (5) and the insulating member (11) are inserted in a flat flow guide member (6) which is broadened at the underside in the manner of a flange, and that the underside of the flow guide member (6), the underside of the insulating member (11), and the cover surface (50) of the electrode (5) form a plane slide surface (60) which continues in a flush manner and in which the electrode (5) contacts the mix (3) in one plane.

3. Apparatus according to claim 2, characterised in that the electrode (5) and the insulating member (11) are inserted in a shaft (12), which is arranged at a guide vane fixedly mounted in the mixer (1) or rotating, or at the mixing tool (2), which serve as flow guide members (6).

## Fig.1

## Fig.2